# EUROPEAN PATENT SPECIFICATION

(11) **EP 4 597 596 B1**
(45) Date of publication and mention of the grant of the patent: **09.12.2026**
(21) Application number: 24219135.1
(22) Date of filing: 11.12.2024
(51) Int. Cl.: H01M 4/04, H01M 4/13, H01M 4/38, H01M 4/505, H01M 4/525, H01M 4/587, H01M 4/66, H01M 10/04, H01M 10/052, H01M 10/0585, H01M 10/48, H01M 4/02

(54) **METHOD AND SYSTEM FOR ESTIMATING ELECTRODE DENSITY IN SECONDARY BATTERIES**
VERFAHREN UND SYSTEM ZUR SCHÄTZUNG DER ELEKTRODENDICHTE IN SEKUNDÄRBATTERIEN
PROCÉDÉ ET SYSTÈME D'ESTIMATION DE DENSITÉ D'ÉLECTRODE DANS DES BATTERIES SECONDAIRES

(30) Priority: 30.01.2024 KR 20240014222
(43) Date of publication of application: 06.08.2025
(73) Proprietor: SAMSUNG SDI CO., LTD., Yongin-si, Gyeonggi-do 17084 (KR)
(72) Inventor: Sohn, Myungbeom, 17084 Yongin-Si, Gyeonggi-do (KR); You, Yongchan, 17084 Yongin-Si, Gyeonggi-do (KR); Lee, Youngjun, 17084 Yongin-Si, Gyeonggi-do (KR); Yoo, Kwangyong, 17084 Yongin-Si, Gyeonggi-do (KR); Park, Seongin, 17084 Yongin-Si, Gyeonggi-do (KR)
(74) Representative: Gulde & Partner

(56) References cited:
- US-A1- 2019 190 072
- US-A1- 2022 399 607

## Description

### BACKGROUND

### 1. Field

Aspects of embodiments of the present disclosure relate to a method and system for estimating electrode density in secondary batteries.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The electrode of a secondary cell may be realized (e.g., produced) by coating a current collector with a homogeneous mixture of an active material, a conductive agent, and a binder. In a case where the active material, the conductive agent, and the binder are respectively applied to the current collector in an appropriate weight per unit area, target electrode performance may be achieved. In a case where the amount of the active material, the conductive agent, and/or the binder applied per unit area is not uniform or the loading level is not uniform, the thickness of the electrode may not be uniform, which may lead to defects. Such defects may include active material dislodgement, cracking, or meandering during subsequent processing, such as pressing and slitting, or a decrease in the structural stability of the electrode assembly, which may result in a decrease in the performance of a produced secondary battery.

In a case where each of the coating layers on opposite sides of the current collector has a loading level and thickness designed to realize the target electrode density, a battery having the target performance may be realized. On the other hand, in mass production, double-sided coated electrodes are produced by a roll-to-roll method, in which the opposite sides are coated almost at the same time. A problem with this process is that the loading level and thickness of each single-sided coating layer is not verifiable during double-sided coating. Therefore, even in a case where the combined loading level and thickness measurements of the final double-sided coated electrode meet the target values, it cannot be guaranteed that each single-sided coating layer has the target loading level and thickness.

US 2019/0190072 A1 discloses a method for estimating electrode density in secondary batteries according to the preamble of claim 1. US 2022/399607 A1 is related to a battery module, a battery pack, a power consumption apparatus, and a manufacturing method of a battery module and a manufacturing device of a battery module.

The above information disclosed in this Background section is for enhancement of understanding of the background of the present disclosure, and therefore, it may contain information that does not constitute related (or prior) art.

### SUMMARY

Aspects of embodiments of the present disclosure are directed to a method and system for estimating electrode density in secondary batteries.

These and other aspects and features of the present disclosure will be described in or will be apparent from the following description of embodiments of the present disclosure.

According to the invention, there is provided a method of estimating an electrode density in secondary batteries, the method including: preparing an electrode including a current collector and first and second coating layers coated on the current collector; measuring first characteristic values of the electrode; removing the first coating layer of the electrode; measuring second characteristic values of the electrode from which the first coating layer has been removed; removing the second coating layer of the electrode from which the first coating layer has been removed; measuring third characteristic values of the electrode from which the first coating layer and the second coating layer have been removed; and estimating at least one of a density of the first coating layer, a density of the second coating layer, a thickness of the current collector, or a weight of the current collector, based on the first characteristic values, the second characteristic values, and the third characteristic values, wherein the estimating includes determining whether there is a measurement anomaly associated with the electrode, based on an estimated thickness of the current collector, an estimated weight of the current collector, a theoretical weight of the current collector, and a theoretical thickness of the current collector., the first characteristic values, the second characteristic values, and the third characteristic values may each include a weight value and a thickness value.

In some embodiments, the current collector may include at least one of an aluminum (Al) foil and a copper (Cu) foil.

In some embodiments, the electrode may be cut to a set size using a punching machine or a laser cutter.

In some embodiments, each of the first coating layer and the second coating layer may include at least one of nickel (Ni), cobalt (Co), manganese (Mn), and iron (Fe).

In some embodiments, each of the first coating layer and the second coating layer may include graphite or silicon (Si).

In some embodiments, the removing of the first coating layer may include removing the first coating layer by repeatedly emitting a pulsed laser toward the first coating layer.

In some embodiments, the determining of whether there is the measurement anomaly may include determining that the electrode is not cut to the set size or the current collector is stretched in a case where the estimated weight of the current collector is about equal to the theoretical weight of the current collector and the estimated thickness of the current collector is not equal to the theoretical thickness of the current collector.

In some embodiments, the determining of whether there is the measurement anomaly may include determining that the electrode is not cut to the set size in a case where the estimated thickness of the current collector is about equal to the theoretical thickness of the current collector and the estimated weight of the current collector is not equal to the theoretical weight of the current collector.

In some embodiments, the determining of whether there is the measurement anomaly may include determining that the current collector is stretched in a case where the estimated thickness of the current collector is not equal to the theoretical thickness of the current collector and the estimated weight of the current collector is not equal to the theoretical weight of the current collector.

In some embodiments, the estimating may include: in response to determining that there is no measurement anomaly, estimating the density of the first coating layer and the density of the second coating layer; comparing the estimated density of the first coating layer to a target coating layer density; and comparing the estimated density of the second coating layer to a target coating layer density.

In some embodiments, the estimating may include estimating the density of the first coating layer based on the first characteristic values and the second characteristic values.

In some embodiments, the estimating may include estimating the density of the second coating layer based on the second characteristic values and the third characteristic values.

In some embodiments, the estimating may include estimating the weight and thickness of the current collector based on the third characteristic values.

In some embodiments, the estimating may include: estimating the weight and thickness of the first coating layer based on the first characteristic values and the second characteristic values; estimating the weight and thickness of the second coating layer based on the second characteristic values and the third characteristic values; estimating the weight of the current collector based on at least a portion of the first characteristic values, the weight of the first coating layer, and the weight of the second coating layer; and estimating the thickness of the current collector based on at least a portion of the first characteristic values, the thickness of the first coating layer, and the thickness of the second coating layer.

In some embodiments, the method may further include: estimating the density of the current collector based on the weight of the current collector and the thickness of the current collector; and comparing the density of the current collector to a normal density range.

In some embodiments, a first side of the current collector is coated with the first coating layer, and a second side of the current collector opposite the first side is coated with the second coating layer.

According to some embodiments of the present disclosure, there is provided a non-transitory computer-readable recording medium storing instructions for executing the method described above on a computer.

According to some embodiments of the present disclosure, there is provided a system for estimating electrode density for secondary batteries, the system including: a measuring device configured to measure characteristic values related to an electrode including a current collector and first and second coating layers coated on the current collector; a remover configured to remove at least one of the first coating layer or the second coating layer of the electrode; and at least one processor configured to estimate data related to the electrode. The measuring device is configured to measure first characteristic values of the electrode, to measure second characteristic values of the electrode from which the first coating layer has been removed by the remover, and to measure third characteristic values of the electrode from which the first coating layer and the second coating layer have been removed by the remover, and the at least one processor is configured to estimate at least one of a density of the first coating layer, a density of the second coating layer, a thickness of the current collector, or a weight of the current collector, based on the first characteristic values, the second characteristic values, and the third characteristic values.

According to some embodiments of the present disclosure, loading levels, thicknesses, weights, densities, and the like may be measured with high accuracy for each of the coating layers and the current collector of a double-sided coated electrode. As a result, the density of each of the coating layers and/or the current collector of the double-sided coated electrode may be derived rapidly and accurately. Accordingly, in mass production of secondary batteries, the quality of the electrodes may be rapidly and accurately controlled.

According to some embodiments of the present disclosure, the coating layer is removed using a laser, and thus the process of removing the coating layer on the electrode may not damage the coating layer on the opposite side, and the coating layer may be removed rapidly and cleanly.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an example of a method of estimating electrode density in secondary batteries according to some embodiments of the present disclosure.
FIG. 2 illustrates a diagram illustrating an internal configuration of a system for estimating electrode density in secondary batteries according to some embodiments of the present disclosure.
FIG. 3 illustrates an example of measuring first characteristic values of an electrode according to some embodiments of the present disclosure.
FIG. 4 illustrates an example of measuring second characteristic values of an electrode according to some embodiments of the present disclosure.
FIG. 5 illustrates an example of measuring third characteristic values of an electrode according to some embodiments of the present disclosure.
FIG. 6 illustrates an example of a method of estimating data related to an electrode according to some embodiments of the present disclosure.
FIG. 7 illustrates an example of a method of determining whether the measurements associated with the electrode are normal according to some embodiments of the present disclosure.
FIG. 8 illustrates examples in which a coating layer and coating layers have been removed according to some embodiments of the present disclosure.
FIG. 9 illustrates examples of graphs in which the reliabilities of data related to electrodes are compared according to some embodiments of the present disclosure.
FIG. 10 illustrates a flowchart showing an example of a method according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

As used herein, the term "module" or "part" refers to a software or hardware component, in which the "module" or "part" performs a specific function. However, the "module" or "part" is not limited to software or hardware. The "module" or "part" may be configured to be in an addressable storage medium or may be configured to reproduce one or more processors. Therefore, for example, the "module" or "part" may include at least one of components, such as software components, object-oriented software components, class components, and task components, processes, functions, attributes, procedures, subroutines, segments of program codes, drivers, firmware, microcodes, circuits, data, databases, data structures, tables, arrays, or variables. Functions provided within the components and the "modules" or "parts" may be combined into smaller number of components and "modules" or "parts" or further divided into additional components and "modules" or "parts".

According to some embodiments of the present disclosure, the "module" or "part" may be implemented as a processor and a memory. The term "processor" should be broadly interpreted as encompassing a general purpose processor, a central processing unit (CPU), a microprocessor, a digital signal processor (DSP), a controller, a microcontroller, a state machine, and the like. In some environments, the "processor" may also refer to an application-specific integrated circuit (ASIC), a programmable logic device (PLD), a field-programmable gate array (FPGA), and the like. For example, the "processor" may also refer to a combination of processing devices, such as a combination of a DSP and a microprocessor, a combination of a plurality of microprocessors, a combination of one or more microprocessors coupled with a DSP core, or any other such configuration. Further, the "memory" should be interpreted broadly as encompassing any electronic component capable of storing electronic information. The "memory" may also refer to various types of processor-readable media, such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, and the like. In a case where the processor may read information from the memory and/or write information to the memory, the memory may be referred to as being in electronic communication with a processor. The memory integrated into a processor is in electronic communication with the processor.

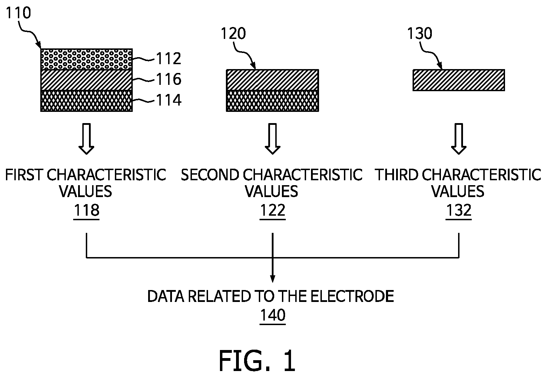

FIG. 1 illustrates an example of a method of estimating electrode density in secondary batteries according to embodiments of the present disclosure. In some embodiments, a double-sided coated electrode 110 may include a current collector 116, a first coating layer 112 coated on a first side of the collector 116, and a second coating layer 114 coated on a second side of the collector 116 opposite the first side. In a case where the double-sided coated electrode 110 is a negative electrode, the current collector 116 may be a copper (Cu) foil, and each of the first coating layer 112 and the second coating layer 114 may be a cathode active material, which includes at least one of graphite and silicon (Si). In another example, in a case where the double-sided coated electrode 110 is a positive electrode, the current collector 116 may be an aluminum (Al) foil, and each of the first coating layer 112 and the second coating layer 114 may be a positive active material, which includes at least one of nickel (Ni), cobalt (Co), manganese (Mn), and iron (Fe).

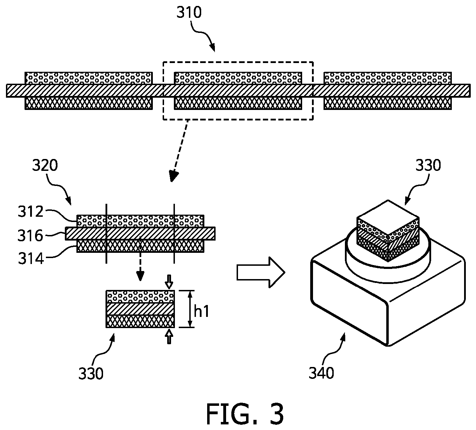

In some embodiments, first characteristic values 118 of the double-sided coated electrode 110 may be measured. Herein, the characteristic value may include a weight value and a thickness value. For example, the first characteristic values 118 may include a weight value and a thickness value of the double-sided coated electrode 110. An example of measuring the first characteristic values 118 will be described in detail later with reference to FIG. 3.

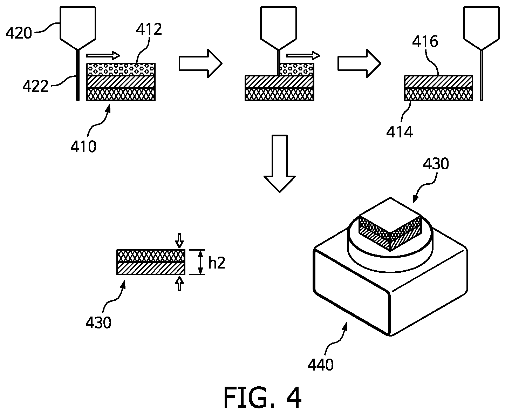

In some embodiments, the first coating layer 112 of the double-sided coated electrode 110 may be removed. For example, the first coating layer 112 may be removed by repeatedly emitting a pulsed laser toward the first coating layer 112. Thereafter, second characteristic values 122 of an electrode 120 from which the first coating layer has been removed may be measured. The second characteristic values 122 may include a weight value and a thickness value of the electrode 120 from which the first coating layer has been removed. An example of measuring the second characteristic values 122 will be described in more detail later with reference to FIG. 4.

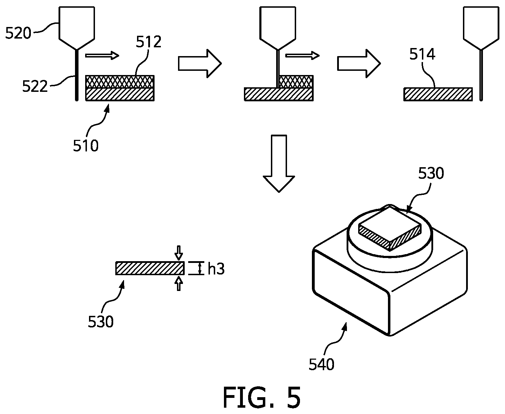

In some embodiments, the second coating layer 114 of the electrode 120, from which the first coating layer has been removed, may be removed. For example, the second coating layer 114 may be removed by repeatedly emitting a pulsed laser toward the second coating layer 114. In this case, third characteristic values 132 of the electrode 130, from which the first coating layer and the second coating layer have been removed, may be measured. The third characteristic values 132 may include a weight value and a thickness value of the electrode 130 from which the first coating layer and the second coating layer have been removed. An example of measuring the third characteristic values 132 will be described in detail later with reference to FIG. 5.

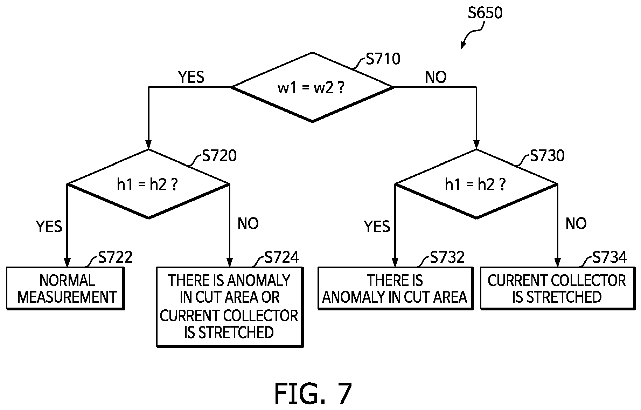

In some embodiments, a density (including a thickness and weight) of the first coating layer 112, a density (including a thickness and weight) of the second coating layer 114, a thickness of the current collector 116, a weight of the current collector 116, a density of the current collector 116, and the like may be calculated, based on the first characteristic values 118, the second characteristic values 122, and the third characteristic values 132. In this case, whether there is a measurement anomaly associated with the electrode may be determined, based on the calculated thickness of the current collector 116, the calculated weight of the current collector 116, a theoretical weight (e.g., a predetermined theoretical weight) of the current collector 116, and a theoretical thickness (e.g., a predetermined theoretical thickness) of the current collector 116. An example of determining whether there is a measurement anomaly will be described in detail later with reference to FIG. 7. In a case where there is no measurement anomaly, the density of the current collector 116 may be calculated based on the thickness of the current collector 116 and the weight of the current collector 116. In addition, it may be determined whether there is a measurement anomaly in each of the density of the first coating layer 112 and the density of the second coating layer 114.

In some embodiments, the density of the current collector 116 may be compared to a set or predetermined normal density range. For example, in a case where the set or predetermined normal density range is 8.75 g/cm³ to 8.96 g/cm³, when the density of the current collector 116 is greater than 8.96 g/cm³, it may be determined that the current collector 116 contains a large amount of heavy impurity atoms. In addition, when the density of the current collector 116 is less than 8.75 g/cm³, it may be determined that the current collector 116 contains a large amount of light impurity atoms.

With this configuration, the loading level, thickness, weight, density, and the like of each of the coating layer and the current collector of the double-sided coating electrode may be measured with high accuracy. Thus, the density of each of the coating layer and/or the current collector of the double-sided coated electrode may be derived rapidly and accurately. As a result, the quality of electrodes may be managed rapidly and accurately during mass production of secondary batteries.

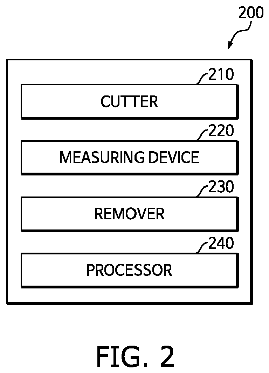

FIG. 2 illustrates a diagram illustrating an internal configuration of a system 200 for estimating electrode density in secondary batteries according to embodiments of the present disclosure. In some embodiments, the system 200 for estimating electrode density (hereinafter, referred to as the "electrode density estimation system 200") may include a cutter 210, a measuring device 220, a remover 230, and a processor 240. The internal configuration of the electrode density estimation system 200 shown in FIG. 2 is merely an example, and may be implemented differently. For example, at least one of the components of the electrode density estimation system 200 may be omitted, other components may be added, and at least one of operations or processes performed by the electrode density estimation system 200 may be performed by an external system.

The cutter 210 may cut the double-sided coated electrode to a predetermined (e.g., preset) size. For example, the cutter 210 may cut the double-sided coated electrode into a square shape with a width and a length of about 1 cm each. Herein, the cutter 210 may include a punching machine, a laser cutter, and/or the like, but is not limited thereto. For example, cutter 210 may include a diode-pumped solid-state laser cutter having a wavelength of about 355 nm and a power output of about 15 W.

The measuring device 220 may measure characteristic values related to a current collector and an electrode including a first coating layer and a second coating layer coated on the current collector. Herein, the characteristic values may include weight values and thickness values. For example, the measuring device 220 may include a high-precision scale for measuring the weight values, a laser displacement sensor for measuring the thickness values, and/or the like, but is not limited thereto.

The remover 230 may remove at least one of the first coating layer and/or the second coating layer coated on the current collector. For example, the remover 230 may remove the first coating layer or the second coating layer by repeatedly emitting a pulsed laser toward the first coating layer and/or the second coating layer. For example, the remover 230 may remove the coating layer(s) by repeatedly (e.g., five or more times) emitting a laser having a wavelength of about 1080 nm, a power of about 200 W, a pulse duration of about 2 ns, a pulse repetition rate of about 200 kHz, and a scan rate of about 4 m/s toward the first coating layer or the second coating layer.

The processor 240 may estimate data related to the electrode. For example, the processor 240 may estimate a density of the first coating layer, a density of the second coating layer, a thickness of the current collector, a weight of the current collector, and/or the like, based on first characteristic values measured from the double-sided coated electrode, second characteristic values of the electrode from which the first coating layer has been removed, and third characteristic values of the electrode from which the first coating layer and the second coating layer have been removed. For example, the processor 240 may estimate the weight, thickness, and density of the first coating layer based on the first characteristic values and the second characteristic values. For example, the processor 240 may estimate the weight, thickness, and density of the second coating layers based on the second characteristic values and the third characteristic values. For example, the processor 240 may estimate the weight and thickness of the current collector based on the third characteristic values. In another example, the processor 240 may estimate the weight of the current collector based on at least a portion of the first characteristic values, the weight of the first coating layer, and the weight of the second coating layer. Similarly, the processor 240 may estimate the thickness of the current collector based on at least a portion of the first characteristic values, the thickness of the first coating layer, and the thickness of the second coating layer. In this case, because the weight and thickness of the current collector are not directly measured by the measuring device 220, whether there is an anomaly in the measurement performed by the measuring device 220 may be determined by comparing the estimated data to a theoretical weight (e.g., a predetermined theoretical weight) and thickness of the current collector.

In some embodiments, the processor 240 may determine whether there is a measurement anomaly associated with the electrode based on the estimated weight and thickness of the current collector and the theoretical weight (e.g., predetermined theoretical weight) and thickness of the current collector. In a case where there is no measurement anomaly, the processor 240 may determine whether the density of each of the first coating layer 112 and the second coating layer 114 is anomalous based on a set or predetermined threshold or range. Further, the processor 240 may estimate the density of the current collector based on the estimated weight and thickness of the current collector. In addition, the processor 240 may determine the quality of the current collector by comparing the density of the current collector to a set or predetermined normal density range. Accordingly, defects in manufactured secondary batteries may be reduced.

FIG. 3 illustrates an example of measuring first characteristic values of an electrode 330 according to embodiments of the present disclosure. In some embodiments, a double-sided coated electrode 320 may be determined (e.g., selected) from a plurality of double-sided coated electrodes 310. In this case, the double-sided coated electrode 320 may include a current collector 316 and first and second coating layers 312 and 314 coated on the current collector 316. Herein, the first coating layer 312 may be coated on a first side of the current collector 316, and the second coating layer 314 may be coated on a second side of the current collector 316 opposite the first side.

In some embodiments, the double-sided coated electrode 320 may be cut to a set or predetermined size (e.g., a square with a width and length of about 1 cm). In this case, the double-sided coated electrode 320 may be cut using a punching machine or a laser cutter. In addition, the double-sided coated electrode 320 may be cut at a set or predetermined point. For example, the double-sided coated electrode 320 may be cut at a point about 5 cm from the left side and about 5 cm from the top.

In some embodiments, the first characteristic values may be measured from the cut double-sided coated electrode 330. Herein, the first characteristic values may include a weight value w1 and a thickness value h1 of the cut double-sided coated electrode 330. For example, the weight value w1 of the cut double-sided coated electrode 330 may be measured using a high-precision scale 340 having a resolution of about 0.01 mg and a reproducibility of about ±0.02 mg. In addition, the thickness value h1 of the central portion of the cut double-sided coated electrode 330 may be measured using a laser displacement sensor having a resolution of about 0.1 µm.

FIG. 4 illustrates an example of measuring second characteristic values of an electrode 430 according to embodiments of the present disclosure. In some embodiments, a first coating layer 412 of a double-sided coated electrode (e.g., 330 in FIG. 3) 410 may be removed by a remover 420. For example, the remover 420 may remove the first coating layer 412 by repeatedly emitting a pulsed laser 422 toward the first coating layer 412. Accordingly, the first coating layer 412 of the double-sided coated electrode 410 may be removed, and only a current collector 416 and a second coating layer 414 may remain.

In some embodiments, second characteristic values may be measured from the electrode 430 from which the first coating layer has been removed. Herein, the second characteristic values may include a weight value w2 and a thickness value h2 of the electrode 430 from which the first coating layer has been removed. For example, the weight value w2 of the electrode 430 from which the first coating layer is removed may be measured using a high-precision scale 440. In addition, the thickness value h2 of the central portion of the electrode 430 from which the first coating layer has been removed may be measured using a laser displacement sensor.

In some embodiments, based on the first characteristic values (e.g., the first characteristic values measured in FIG. 3) and the second characteristic values, the weight and thickness of the first coating layer 412 may be estimated. An example of estimating the weight and thickness of the first coating layer 412 may be expressed as in Equation 1 below. $\begin{matrix}Weight of First Coating Layer = w 1 - w 2 \\ Thickness of First Coating Layer = h 1 - h 2\end{matrix}$ Equation 1

Herein, w1 may be a weight value included in the first characteristic values, and w2 may be a weight value included in the second characteristic values. Further, h1 may be a thickness value included in the first characteristic values, and h2 may be a thickness value included in the second characteristic values. Based on the weight and thickness of the first coating layer 412 estimated as above, a density of the first coating layer 412 may be estimated.

FIG. 5 illustrates an example of measuring third characteristic values of an electrode according to embodiments of the present disclosure. In some embodiments, a second coating layer 512 of an electrode 510 (e.g., 430 in FIG. 4) from which a first coating layer has been removed may be removed by a remover 520. For example, the remover 520 may remove the second coating layer 512 by repeatedly emitting a pulsed laser 522 toward the second coating layer 512. Accordingly, the second coating layer 512 of the electrode 510 from which the first coating layer has been removed may be removed, and only the current collector 514 may remain.

In some embodiments, third characteristic values may be measured from an electrode 530 from which the first coating layer and the second coating layer have been removed. Herein, the third characteristic values may include a weight value w3 and a thickness value h3 of the electrode 530 from which the first coating layer and the second coating layer have been removed. For example, the weight value w3 of the electrode 530 from which the first coating layer and the second coating layer have been removed may be measured using a high-precision scale 540. In addition, a thickness value h3 of the central portion of the electrode 530 from which the first coating layer and the second coating layer have been removed may be measured using a laser displacement sensor.

In some embodiments, a weight and thickness of the second coating layer 512 may be measured based on second characteristic values (e.g., the second characteristic values measured in FIG. 4) and third characteristic values. An example of estimating the weight and thickness of the second coating layer 512 may be expressed as in Equation 2 below. $\begin{matrix}Weight of Second Coating Layer = w 2 - w 3 \\ Thickness of Second Coating Layer = h 2 - h 3\end{matrix}$ Equation 2

Herein, w2 may be a weight value included in the second characteristic values, and w3 may be a weight value included in the third characteristic values. In addition, h2 may be a thickness value included in the second characteristic values, and h3 may be a thickness value included in third second characteristic values. Based on the weight and thickness of the second coating layer 512 estimated as above, a density of the second coating layer 512 may be estimated.

In some embodiments, the weight and thickness of the current collector 514 may be estimated. For example, the weight and thickness of the current collector 514 may be estimated based on the first characteristic values, the second characteristic values, and the third characteristic values. An example of estimating the weight and thickness of the current collector 514 may be expressed as in Equation 3 below $\begin{matrix}Weight of Current Collector \\ = w 1 - Weight of First Coating Layer - Weight of Second Coating Layer \\ Thickness of Current Collector \\ = h 1 - Thickness of First Coating Layer \\ - Thickness of Second Coating Layer\end{matrix}$ Equation 3

A density of the current collector 514 may be estimated based on the weight and thickness of current collector 514 estimated as above. In another example, a density of the current collector 514 may be estimated based on the third characteristic values.

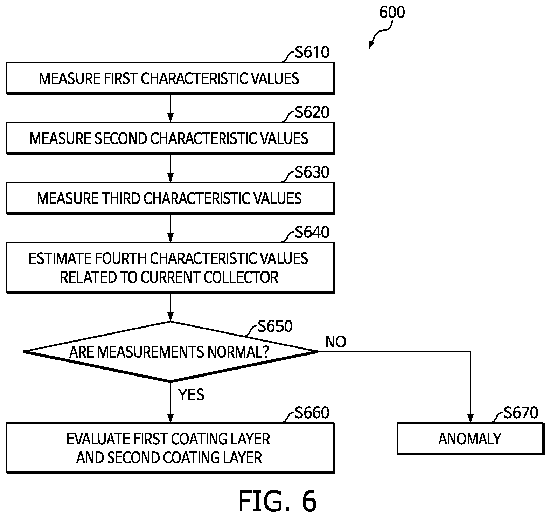

FIG. 6 illustrates an example of a method 600 of estimating data related to an electrode according to embodiments of the present disclosure. At least one step of the method 600 may be performed by at least one processor. In some embodiments, the method 600 may be started by measuring first characteristic values of a current collector and an electrode including a first coating layer and a second coating layer coated on the current collector in S610. Herein, the characteristic values may include a weight value and a thickness value. Thereafter, the first coating layer of the electrode may be removed.

The second characteristic values of the electrode from which the first coating layer has been removed may be measured in S620. Thereafter, the second coating layer of the electrode from which the first coating layer has been removed may be removed. Third characteristic values of the electrode from which the first coating layer and the second coating layer have been removed may be measured in S630.

In some embodiments, the processor may estimate fourth characteristic values related to the current collector based on the first characteristic values, the second characteristic values, and the third characteristic values in S640. Herein, the fourth characteristic values related to the current collector may include a weight and a thickness of the current collector. For example, the processor may estimate the weight and thickness of the first coating layer based on the first characteristic values and the second characteristic values. Further, the processor may estimate a weight and thickness of the second coating layer based on the second characteristic values and the third characteristic values. Thereafter, the processor may estimate the weight of the current collector based on the weight value among the first characteristic values, the weight of the first coating layer, and the weight of the second coating layer. Similarly, the processor may estimate the thickness of the current collector based on the thickness value among the first characteristic values, the thickness of the first coating layer, and the thickness of the second coating layer.

Thereafter, the processor may determine whether the measurements associated with the electrode are normal (e.g., standard or expected) based on the estimated thickness and weight of the current collector and a theoretical weight (e.g., predetermined theoretical weight) and thickness of the current collector in S650. For example, the processor may compare the estimated thickness of the current collector to the theoretical thickness (e.g., a predetermined theoretical thickness or a theoretical thickness range) of the current collector. Further, the processor may compare the estimated weight of the current collector to the theoretical weight (e.g., predetermined theoretical weight) (or a theoretical weight range) of the current collector. A method of determining whether the measurements are normal will be described later with reference to FIG. 7.

In some embodiments, in a case where the measurements associated with the electrode are determined to be normal (YES in S650), the processor may evaluate the density of the first coating layer and the density of the second coating layer S660. For example, the processor may evaluate whether the first coating layer and the second coating layer are formed normally by comparing the density of each of the estimated first coating layer and the second coating layer to a target coating layer density. Further, the processor may estimate and evaluate the density of the current collector based on third measurement values (i.e., a measured thickness and weight of the current collector). For example, the processor may compare the density of the current collector to a set or predetermined normal density range. In a case where the density of the current collector is normal, the processor may determine that all of the density of the first coating layer, the density of the second coating layer, and the density of the current collector of the electrode that have been measured/inspected are normal.

On the other hand, in a case where the measurements associated with the electrode are determined to be abnormal, the processor may determine that there is an anomaly in the measurements (e.g., S610, S620, and S630) in S670. In this case, the method described above may be repeated using a sample from a different electrode.

FIG. 7 illustrates an example of a method S650 of determining whether the measurements associated with the electrode are normal according to embodiments of the present disclosure. In some embodiments, the method S650 may be performed by at least one processor. The method S650 may be started by the processor comparing the estimated weight w1 of the current collector and a theoretical weight (e.g., predetermined theoretical weight) w2 of the current collector in S710. In a case where the estimated weight w1 of the current collector and the theoretical weight (e.g., predetermined theoretical weight) w2 of the current collector are the same (YES in S710), the processor may compare the estimated thickness h1 of the current collector and a theoretical thickness (e.g., a predetermined theoretical thickness) h2 of the current collector in S720.

In some embodiments, in a case where the estimated weight w1 of the current collector and the theoretical weight (e.g., predetermined theoretical weight) w2 of the current collector are the same and the estimated thickness h1 of the current collector and the theoretical thickness (e.g., a predetermined theoretical thickness) h2 of the current collector are also the same (YES in S720), the processor may determine that the measurements associated with the electrode are normal in S722. In this case, the processor may evaluate the density of each the first coating layer and the second coating layer. In addition, the processor may estimate and evaluate the density of the current collector based on the measured thickness and weight of the current collector.

In a case where the estimated weight w1 of the current collector and the theoretical weight (e.g., predetermined theoretical weight) w2 of the current collector are the same and the estimated thickness h1 of the current collector and the theoretical thickness (e.g., a predetermined theoretical thickness) h2 of the current collector are not the same (NO in S720), the processor may determine that there is an anomaly in the cut area of the electrode because the electrode is not cut to a set or predetermined size or that the current collector is stretched in S724.

In some embodiments, in a case where the estimated weight w1 of the current collector and the theoretical weight (e.g., predetermined theoretical weight) w2 of the current collector are not the same (NO in S710), the processor may compare the estimated thickness h1 of the current collector and the theoretical thickness (e.g., a predetermined theoretical thickness) h2 of the current collector in S730. In a case where the estimated weight w1 of the current collector and the theoretical weight (e.g., predetermined theoretical weight) w2 of the current collector are not the same and the estimated thickness h1 of the current collector and the theoretical thickness (e.g., a predetermined theoretical thickness) h2 of the current collector are the same (YES in S730), the processor may determine that the electrode is not cut to the set or predetermined size and the cut width of the electrode is abnormal in S732. In contrast, in a case where the estimated weight w1 of the current collector and the theoretical weight (e.g., predetermined theoretical weight) w2 of the current collector are not the same and the estimated thickness h1 of the current collector and the theoretical thickness (e.g., a predetermined theoretical thickness) h2 of the current collector are also not the same (NO in S730), the processor may determine that the current collector is stretched (S734).

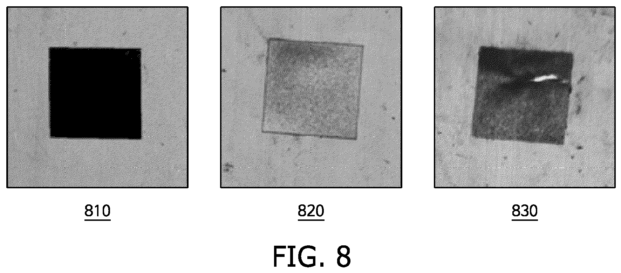

FIG. 8 illustrates examples in which a coating layer and coating layers have been removed according to embodiments of the present disclosure. A first image 810 is an example illustrating an electrode including a current collector coated with a coating layer. In this case, the current collector is coated with the coating layer, and thus the current collector may be visually covered with the coating layer.

A second image 820 is a comparative example illustrating an electrode from which a coating layer has been removed using a solvent. In this case, the solvent may include water, and the coating layer may be removed manually using a wiper sheet. When the coating layer of the electrode is removed using the solvent in this manner, a coating layer on the opposite side may be damaged by physical force used to remove the coating layer, and a drying time may be used to remove any residue of the solvent.

An image 830 is an example illustrating an electrode from which a coating layer has been removed using a laser according to an embodiment of the present disclosure. Compared to the second image 820, because the coating layer is removed using a laser, the process of removing the coating layer from one side does not damage the coating layer on the opposite side, and the coating layer may be removed rapidly and cleanly.

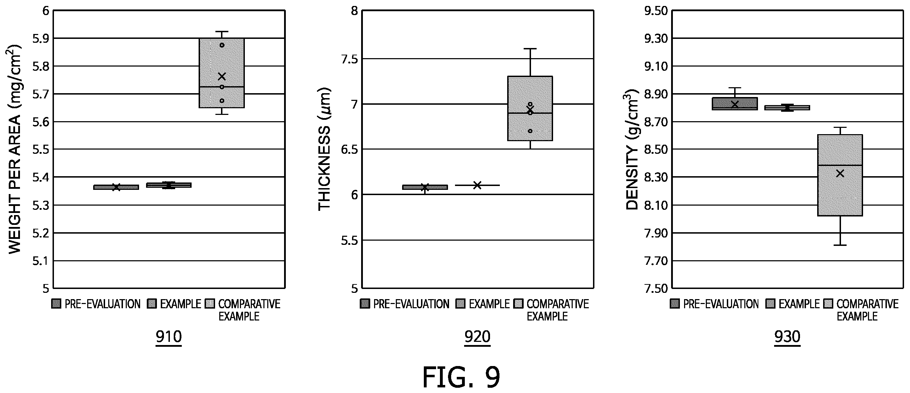

FIG. 9 illustrates examples of graphs 910, 920, and 930 in which the reliabilities of data related to electrodes are compared according to embodiments of the present disclosure. A first graph 910 is an example illustrating a pre-evaluated weight per area of a current collector, an estimated weight per area of a current collector according to an example of the present disclosure, and an estimated weight per area of a current collector according to a comparative example. Further, a second graph 920 is an example illustrating a pre-evaluated thickness of the current collector, an estimated thickness of a current collector according to the example of the present disclosure, and an estimated thickness of a current collector according to the comparative example. A third graph 930 is an example graph illustrating a pre-evaluated density of a current collector, an estimated density of the current collector according to the example of the present disclosure, and an estimated density of the current collector according to the comparative example.

The pre-evaluated data associated with the current collector may represent characteristic values of the current collector measured using a high-precision scale and a laser displacement sensor after the current collector is cut to a set or predetermined size (e.g., a square shape having a width and length of 1 cm) prior to the coating. Table 1 below may illustrate the pre-evaluated data associated with the current collector.

**Table 1**

| | Weight per Area (mg/cm²) | Thickness (µm) | Density (g/cm³) |
|---|---|---|---|
| Sample A | 5.37 | 6.1 | 8.8 |
| Sample B | 5.37 | 6.1 | 8.8 |
| Sample C | 5.36 | 6.1 | 8.79 |
| Sample D | 5.36 | 6.1 | 8.79 |
| Sample E | 5.37 | 6 | 8.95 |
| Average | 5.37 | 6.08 | 8.83 |
| Standard Deviation | 0.005 | 0.045 | 0.07 |

The current collector according to an example of the present disclosure is a current collector in which a coating layer has been removed from an electrode using a laser, and a weight per area of the current collector may be estimated based on a weight per area of a double-sided coated electrode, a weight of the first coating layer, and a weight of the second coating layer as described above with reference to FIGS. 3 to 5 and in Equation 3. Further, the thickness of the current collector according to the example of the present disclosure may be estimated based on the thickness of the double-sided coated electrode, the thickness of the first coating layer, and the thickness of the second coating layer as described above with reference to FIGS. 3 to 5 and in Equation 3. In addition, the density of the current collector may be estimated based on the weight and thickness of the current collector. Table 2 below illustrates data associated with the current collector according to the example of the present disclosure.

**Table 2**

| | Weight per Area (mg/cm²) | | | | | Thickness (µm) | | | | | Density (g/cm³) | | |
|---|---|---|---|---|---|---|---|---|---|---|---|---|---|
| Example | w1 | w2 | w3 | w4 | Sum | t1 | t2 | t3 | t4 | Sum | d2 | d3 | d4 |
| Sample A | 25.35 | 9.98 | 9.99 | 5.37 | 25.34 | 126 | 59.9 | 60 | 6.1 | 126 | 1.67 | 1.67 | 8.80 |
| Sample B | 25.3 4 | 9.97 | 10 | 5.37 | 25.3 4 | 126 | 59.8 | 60.1 | 6. 1 | 12 6 | 1.67 | 1.67 | 8.80 |
| Sample C | 25.3 4 | 9.99 | 9.98 | 5.37 | 25.3 4 | 125. 9 | 60 | 59.9 | 6. 1 | 12 6 | 1.67 | 1.67 | 8.80 |
| Sample D | 25.3 4 | 9.98 | 10.0 1 | 5.36 | 25.3 5 | 126 | 59.9 | 60 | 6. 1 | 12 6 | 1.67 | 1.67 | 8.79 |
| Sample E | 25.3 3 | 9.97 | 9.99 | 5.38 | 25.3 4 | 126. 1 | 60 | 59.9 | 6. 1 | 12 6 | 1.67 | 1.66 | 8.82 |
| Average | 25.3 3 | 9.98 | 9.99 | 5.37 | 25.3 4 | 126 | 59.9 2 | 59.9 8 | 6. 1 | 12 6 | 1.66 | 1.67 | 8.80 |
| Standard Deviation | 0.00 7 | 0.00 8 | 0.01 1 | 0.00 7 | 0.00 4 | 0.07 | 0.08 3 | 0.08 3 | 0 | 0 | 0.00 2 | 0.00 2 | 0.01 2 |

Herein, w1 indicates a weight of the double-sided coated electrode, w2 indicates a weight of the first coating layer, w3 indicates a weight of the second coating layer, and w4 indicates a weight of the current collector. Further, t1 indicates a thickness of the double-sided coated electrode, t2 indicates a thickness of the first coating layer, t3 indicates a thickness of the second coating layer, and t4 indicates a thickness of the current collector. Further, d2 indicates a density of the first coating layer, d3 indicates a density of the second coating layer, and d4 indicates a density of the current collector. In addition, the sum of the weights per area is the sum of w2, w3, and w4, and the sum of the thicknesses is the sum of t2, t3, and t4.

The current collector according to the comparative example is a current collector in which a coating layer has been removed from an electrode using a solvent, and a weight per area of the current collector according to the comparative example may be estimated based on a weight per area of the double-sided coated electrode, a weight of the first coating layer, and a weight of the second coating layer as described above with reference to FIGS. 3 to 5 and in Equation 3. Further, the thickness of the current collector according to the comparative example may be estimated based on the thickness of the double-sided coated electrode, the thickness of the first coating layer, and the thickness of the second coating layer as described above with reference to FIGS. 3 to 5 and in Equation 3. In addition, the density of the current collector according to the comparative example may be estimated based on the weight and thickness of the current collector. Table 3 below illustrates data associated with the current collector according to the comparative example.

**Table 3**

| | Weight per Area (mg/cm²) | | | | | Thickness (µm) | | | | | Density (g/cm³) | | |
|---|---|---|---|---|---|---|---|---|---|---|---|---|---|
| Example | w1 | w2 | w3 | w4 | Su m | t1 | t2 | t3 | t4 | Sum | d2 | d3 | d4 |
| Comp. Example | 25. 34 | 9.7 9 | 9.8 3 | 5.73 | 25. 35 | 126. 1 | 59.4 | 60.1 | 6.7 | 126. 2 | 1.65 | 1.67 | 8.5 5 |
| Sample A | 25. 33 | 9.4 9 | 9.9 1 | 5.93 | 25. 33 | 126 | 58.6 | 60 | 7.6 | 126. 2 | 1.62 | 1.64 | 7.8 0 |
| Sample B | 25. 34 | 9.8 9 | 9.7 7 | 5.68 | 25. 34 | 126. 1 | 60.1 | 59.1 | 6.9 | 126. 1 | 1.65 | 1.65 | 8.2 3 |
| Sample C | 25. 35 | 9.7 8 | 9.9 4 | 5.63 | 25. 35 | 126 | 59.6 | 59.9 | 6.5 | 126 | 1.64 | 1.65 | 8.6 6 |
| Sample D | 25. 34 | 9.6 4 | 9.8 4 | 5.87 | 25. 35 | 125. 9 | 58.9 | 60.1 | 7 | 126 | 1.64 | 1.66 | 8.3 9 |
| Sample E | 25. 34 | 9.7 2 | 9.8 6 | 5.77 | 25. 34 | 126. 02 | 59.3 2 | 59.8 4 | 6.9 4 | 126. 1 | 1.64 | 1.65 | 8.3 3 |
| Average | 0.0 07 | 0.1 55 | 0.0 68 | 0.12 7 | 0.0 09 | 0.08 4 | 0.58 9 | 0.42 2 | 0.4 16 | 0.1 | 0.01 1 | 0.01 | 0.3 35 |
| Standard Deviation | 25. 34 | 9.7 9 | 9.8 3 | 5.73 | 25. 35 | 126. 1 | 59.4 | 60.1 | 6.7 | 126. 2 | 1.65 | 1.67 | 8.5 5 |

A first graph 910, a second graph 920, and a third graph 930 illustrate graphs obtained by statistically processing the data in Tables 1 to 3. Referring to the first graph 910, the second graph 920, and the third graph 930, it may be seen that the data associated with the current collector according to the example of the present disclosure is similar to the data associated with the pre-evaluated current collector, but the data associated with the current collector according to the comparative example is significantly different from the data associated with the pre-evaluated current collector. That is, it may be seen that the electrode density measurement method of the comparative example is less reliable, but the electrode density precision measurement method according to the example of the present disclosure is more reliable.

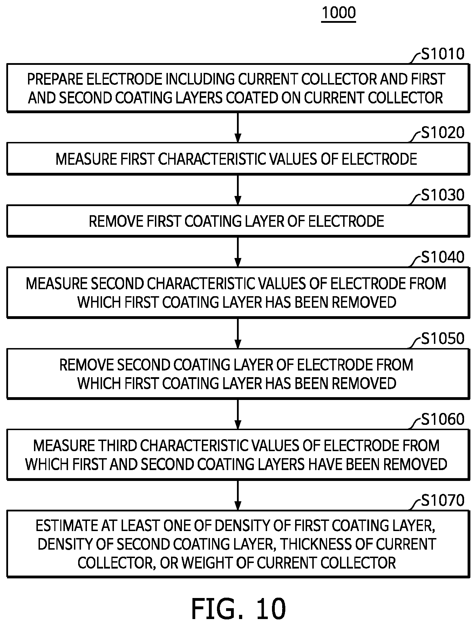

FIG. 10 illustrates a flowchart showing an example of a method 1000 according to embodiments of the present disclosure. In some embodiments, the method 1000 may be started by preparing an electrode including a current collector and a first coating layer and a second coating layer coated on the current collector (S1010). Herein, the current collector may be an aluminum (Al) foil or a copper (Cu) foil. Further, the electrode may be cut to a set or predetermined size using a punching machine or a laser cutter. In addition, the first coating layer may be coated on a first side of the current collector, and the second coating layer may be coated on a second side of the current collector opposite the first side.

Thereafter, first characteristic values of the electrode may be measured (S1020). Subsequently, the first coating layer of the electrode may be removed (S1030). For example, the first coating layer may be removed by repeatedly emitting a pulsed laser toward the first coating layer. Thereafter, second characteristic values of the electrode from which the first coating layer has been removed may be measured (S1040).

Thereafter, the second coating layer of the electrode from which the first coating layer has been removed may be removed (S1050). In addition, third characteristic values of the electrode from which the first coating layer and the second coating layer have been removed may be measured (S1060). Herein, the first characteristic values, the second characteristic values, and the third characteristic values may respectively include a weight value and a thickness value.

Thereafter, based on the first characteristic values, the second characteristic values, and the third characteristic values, at least one of the density of the first coating layer, the density of the second coating layer, the thickness of the current collector, and the weight of the current collector may be estimated (S1070). In this case, whether there is a measurement anomaly associated with the electrode may be determined based on an estimated thickness of the current collector, an estimated weight of the current collector, the theoretical weight (e.g., predetermined theoretical weight) of the current collector, and a theoretical thickness (e.g., a predetermined theoretical thickness) of the current collector. For example, in a case where the estimated weight of the current collector is equal to the theoretical weight (e.g., predetermined theoretical weight) of the current collector and the estimated thickness of the current collector is not equal to the theoretical thickness (e.g., a predetermined theoretical thickness) of the current collector, it may be determined that the electrode is not cut to the set or predetermined size or the current collector is stretched. In another example, in a case where the estimated thickness of the current collector is equal to the theoretical thickness (e.g., a predetermined theoretical thickness) of the current collector and the estimated weight of the current collector is not equal to the theoretical weight (e.g., predetermined theoretical weight) of the current collector, it may be determined that the electrode is not cut to the set or predetermined size. In another example, in a case where the estimated thickness of the current collector is not equal to the theoretical thickness (e.g., a predetermined theoretical thickness) of the current collector and the estimated weight of the current collector is not equal to the theoretical weight (e.g., predetermined theoretical weight) of the current collector, it may be determined that the current collector is stretched.

In some embodiments, in response to determining that there is no measurement anomaly, the density of the first coating layer and the density of the second coating layer may be estimated. Further, the estimated density of the first coating layer may be compared to a target coating layer density. Further, the estimated density of the second coating layer may be compared to a target coating layer density.

In some embodiments, the density of the first coating layer may be estimated based on the first characteristic values and the second characteristic values. Further, the density of the second coating layer may be estimated based on the second characteristic values and the third characteristic values. In addition, the weight and thickness of the current collector may be estimated based on the third characteristic values.

In some embodiments, the weight and thickness of the first coating layer may be estimated based on the first characteristic values and the second characteristic values. Further, the weight and thickness of the second coating layer may be estimated based on the second characteristic values and the third characteristic values. The weight of the current collector may be estimated based on at least a portion of the first characteristic values, the weight of the first coating layer, and the weight of the second coating layer. In addition, the thickness of the current collector may be estimated based on at least a portion of the first characteristic values, the thickness of the first coating layer and the thickness of the second coating layer.

In some embodiments, the density of the current collector may be estimated based on the weight of the current collector and the thickness of the current collector. In addition, the density of the current collector may be compared to a set or predetermined normal density range.

In some embodiments, each of the first coating layer and the second coating layer may include at least one of nickel (Ni), cobalt (Co), manganese (Mn), and iron (Fe). In another example, each of the first coating layer and the second coating layer may include at least one of graphite and silicon (Si).

The method described above may be provided as a computer program stored on a computer readable recording medium to be executed on a computer. The medium may be a medium that continuously stores a computer-executable program, or may be a medium that temporarily stores a computer-executable program for execution or download. The medium may also be a variety of recording or storage means including a single piece of hardware or a combination of several pieces of hardware, and may be distributed over a network, rather than being limited to a medium directly connected to any computer system. Examples of media may include magnetic media, such as a hard disk, a floppy disk, and magnetic tape; optical recording media, such as CD-ROM and a DVD; magneto-optical media, such as a floptical disk; and other media configured to store program instructions, including ROM, RAM, flash memory, and the like. In addition, other examples of media may include an app store that distributes applications, a site that provides or distributes various other software, and a recording or storage medium maintained by a server or the like.

The methods, actions, or techniques of the present disclosure may be implemented by a variety of means. For example, these techniques may be implemented in hardware, firmware, software, or a combination thereof. Persons having ordinary knowledge in the art will understand that the various illustrative logical blocks, modules, circuits, and algorithmic steps described in connection with the present disclosure may be implemented in electronic hardware, computer software, or a combination thereof. To clearly illustrate such interchangeability of hardware and software, the various exemplary components, blocks, modules, circuits, and steps have been described above generally in terms of their functions. Whether such functions are implemented in hardware or software depends on the design requirements imposed on the specific application and the overall system. Persons having ordinary knowledge in the art may implement the functions described in various manners for each particular application, but such implementations should not be construed as departing from the scope of the present disclosure.

In hardware implementations, the processing units used to perform the techniques may include one or more ASICs, DSPs, GPUs, digital signal processing devices (DSPDs), programmable logic devices (PLDs), field programmable gate arrays (FPGAs), processors, controllers, microcontrollers, microprocessors, electronics, electronic devices, other electronic units designed to perform the functions described herein, a computer, or a combination thereof.

Accordingly, the various exemplary logic blocks, modules, and circuits described in connection with the present disclosure may be implemented or performed with a general purpose processor, a DSP, an ASIC, an FPGA or other programmable logic devices, a discrete gate or transistor logic, discrete hardware components, or any combination of those designed to perform the functions described herein. The general-purpose processor may be a microprocessor, but in another example, may be any conventional processor, controller, microcontroller, or state machine. The processor may also be implemented as a combination of computing devices, e.g., a DSP and a microprocessor, a plurality of microprocessors, one or more microprocessors associated with a DSP core, or any other combination of configurations.

In firmware and/or software implementations, the techniques may be implemented as instructions stored on a computer readable medium, such as random access memory (RAM), read-only memory (ROM), non-volatile random access memory (NVRAM), programmable read-only memory (PROM), erasable programmable read-only memory (EPROM), electronically erasable PROM (EEPROM), flash memory, and other random access memory (ROM); (NVRAM), programmable read-only memory (PROM), erasable programmable read-only memory (EPROM), electrically erasable PROM (EEPROM), flash memory, a compact disc (CD), or a magnetic or optical data storage device. The instructions may be executable by one or more processors, and may cause the processor(s) to perform certain aspects of the functions described herein.

When implemented as software, the techniques may be one or more instructions or codes stored on or transmitted through a computer readable medium. Computer readable media include both computer storage media and communication media, including any media that facilitate the transmission of a computer program from one location to another. The storage media may be any available medium that can be accessed by a computer. As non-limiting examples, such computer readable media may include RAM, ROM, EEPROM, CD-ROM or other optical disk storage, magnetic disk storage or other magnetic storage devices, or any other media that may be used to transfer or store desired program codes in the form of instructions or data structures and that may be accessed by a computer. In addition, any access to the computer readable medium is performed in an appropriate manner.

For example, in a case where software is transmitted from a Web site, server, or other remote source using coaxial cable, fiber optic cable, twisted pair, digital subscriber line (DSL), or wireless technologies such as infrared, radio, and microwave, the coaxial cable, fiber optic cable, twisted pair, digital subscriber line, or wireless technologies such as infrared, radio, and microwave are included in the definition of media. The terms "disk" and "disc" as used herein include compact discs (CDs), laserdiscs, optical discs, digital versatile discs (DVDs), floppy disks, and Blu-ray disks, where disks generally magnetically reproduce data, while discs optically reproduce data using a laser. Combinations of the above should also be included in the scope of computer readable media.

The software module may reside in RAM memory, flash memory, ROM memory, EPROM memory, EEPROM memory, registers, a hard disk, a removable disk, CD-ROM, or any other type of storage medium known in the art. The exemplary storage medium may be connected to a processor, so that the processor can read information from the storage medium or write information to the storage medium. In another example, the storage medium may be integrated with the processor. The processor and the storage medium may reside in an ASIC. The ASIC may reside in a user terminal. In another example, the processor and the storage medium may be present as separate components in the user terminal.

Although the present disclosure has been described above with respect to embodiments thereof, the present disclosure is not limited thereto. Various modifications and variations can be made thereto by those skilled in the art within the scope of the appended claims.

### Description of some of the Reference Numerals

110: double-sided coated electrode
112: first coating layer
114: second coating layer
116: current collector
118: first characteristic values
120: electrode from which first coating layer has been removed
122: second characteristic values
130: electrode from which first coating layer and second coating layer have been removed
132: third characteristic values
140: data related to the electrode

## Claims

1. A method (600, 1000) of estimating an electrode (120, 130, 330, 430, 510, 530) density in secondary batteries, the method (600, 1000) comprising:
preparing (S1010) an electrode (110, 120, 130, 330, 430, 510, 530) comprising a current collector (116, 316, 416, 514) and first and second coating layers (112, 114, 312, 314) coated on the current collector (116, 316, 416, 514);
measuring (S1020) first characteristic values (118) of the electrode (120, 130, 330, 430, 510, 530);
removing (S1030) the first coating layer (112, 312, 412) of the electrode (120, 130, 330, 430, 510, 530);
measuring (S1040) second characteristic values (122) of the electrode (120, 130, 330, 430, 510, 530) from which the first coating layer (112, 312, 412) has been removed;
removing (S1050) the second coating layer (114, 314, 414, 512) of the electrode (120, 130, 330, 430, 510, 530) from which the first coating layer (112, 312, 412) has been removed;
measuring (S1060) third characteristic values (132) of the electrode (120, 130, 330, 430, 510, 530) from which the first coating layer (112, 312, 412) and the second coating layer (114, 314, 414, 512) have been removed; and
estimating (S1070) at least one of a density of the first coating layer (112, 312, 412), a density of the second coating layer (114, 314, 414, 512), a thickness of the current collector (116, 316, 416, 514), or a weight of the current collector (116, 316, 416, 514), based on the first characteristic values (118), the second characteristic values (122), and the third characteristic values (132) wherein the first characteristic values (118), the second characteristic values (122), and the third characteristic values (132) each comprise a weight value and a thickness value **characterized in that**
the estimating (S1070) comprises determining whether there is a measurement anomaly associated with the electrode (110, 120, 130, 330, 430, 510, 530), based on an estimated thickness of the current collector (316, 416, 514), an estimated weight of the current collector (316, 416, 514), a theoretical weight of the current collector (316, 416, 514), and a theoretical thickness of the current collector (316, 416, 514).

2. The method (600, 1000) as claimed in claim 1, wherein the current collector (116, 316, 416, 514) comprises at least one of an aluminum (Al) foil and a copper (Cu) foil.

3. The method (600, 1000) as claimed in claims 1 or 2, wherein the electrode (110, 120, 130, 330, 430, 510, 530) is cut to a set size using a punching machine or a laser cutter (210).

4. The method (600, 1000) as claimed in claims 1 to 3, wherein each of the first coating layer (112, 312, 412) and the second coating layer (114, 314, 414, 512) comprises at least one of nickel (Ni), cobalt (Co), manganese (Mn), and iron (Fe).

5. The method (600, 1000) as claimed in claims 1 to 4, wherein each of the first coating layer (112, 312, 412) and the second coating layer (114, 314, 414, 512) comprises graphite or silicon (Si).

6. The method (600, 1000) as claimed in claims 1 to 5, wherein the removing S1030 of the first coating layer (112, 312, 412) comprises removing the first coating layer (112, 312, 412) by repeatedly emitting a pulsed laser (422, 522) toward the first coating layer (112, 312, 412).

7. The method (600, 1000) as claimed in claim 1, wherein the determining of whether there is the measurement anomaly comprises determining that the electrode (110, 120, 130, 330, 430, 510, 530) is not cut to the set size or the current collector (116, 316, 416, 514) is stretched in a case where the estimated weight of the current collector (316, 416, 514) is about equal to the theoretical weight of the current collector (316, 416, 514) and the estimated thickness of the current collector (316, 416, 514) is not equal to the theoretical thickness of the current collector (316, 416, 514).

8. The method (600, 1000) as claimed in claim 1, wherein the determining of whether there is the measurement anomaly comprises determining that the electrode (110, 120, 130, 330, 430, 510, 530) is not cut to the set size in a case where the estimated thickness of the current collector (316, 416, 514) is about equal to the theoretical thickness of the current collector (316, 416, 514) and the estimated weight of the current collector (316, 416, 514) is not equal to the theoretical weight of the current collector (316, 416, 514).

9. The method (600, 1000) as claimed in claim 1, wherein the determining of whether there is the measurement anomaly comprises determining that the current collector (116, 316, 416, 514) is stretched in a case where the estimated thickness of the current collector (316, 416, 514) is not equal to the theoretical thickness of the current collector (316, 416, 514) and the estimated weight of the current collector (316, 416, 514) is not equal to the theoretical weight of the current collector (316, 416, 514).

10. The method (600, 1000) as claimed in claim 1, wherein the estimating (S1070) comprises:
in response to determining that there is no measurement anomaly, estimating the density of the first coating layer (112, 312, 412) and the density of the second coating layer (114, 314, 414, 512);
comparing the estimated density of the first coating layer (112, 312, 412) to a target coating layer density; and
comparing the estimated density of the second coating layer (114, 314, 414, 512) to a target coating layer density.

11. The method (600, 1000) as claimed in claim 1 to 10, wherein the estimating (S1070) comprises estimating the density of the first coating layer (112, 312, 412) based on the first characteristic values (118) and the second characteristic values (122).

12. The method (600, 1000) as claimed in claims 1 to 11, wherein the estimating (S1070) comprises estimating the density of the second coating layer (114, 314, 414, 512) based on the second characteristic values (122) and the third characteristic values (132).

13. The method (600, 1000) as claimed in claim 1 to 12, wherein the estimating (S1070) comprises estimating the weight and thickness of the current collector (116, 316, 416, 514) based on the third characteristic values (132).

## Patentansprüche

1. Verfahren (600, 1000) zur Schätzung der Dichte einer Elektrode (120, 130, 330, 430, 510, 530) in Sekundärbatterien, wobei das Verfahren (600, 1000) Folgendes umfasst:
Vorbereiten (S1010) einer Elektrode (110, 120, 130, 330, 430, 510, 530), die einen Stromkollektor (116, 316, 416, 514) sowie eine erste und eine zweite Beschichtungsschicht (112, 114, 312, 314), die auf den Stromkollektor (116, 316, 416, 514) aufgebracht sind, umfasst;
Messen (S1020) erster Kennwerte (118) der Elektrode (120, 130, 330, 430, 510, 530);
Entfernen (S1030) der ersten Beschichtungsschicht (112, 312, 412) der Elektrode (120, 130, 330, 430, 510, 530);
Messen (S1040) zweiter Kennwerte (122) der Elektrode (120, 130, 330, 430, 510, 530), von der die erste Beschichtungsschicht (112, 312, 412) entfernt wurde;
Entfernen (S1050) der zweiten Beschichtungsschicht (114, 314, 414, 512) der Elektrode (120, 130, 330, 430, 510, 530), von der die erste Beschichtungsschicht (112, 312, 412) entfernt wurde;
Messen (S1060) dritter Kennwerte (132) der Elektrode (120, 130, 330, 430, 510, 530), von der die erste Beschichtungsschicht (112, 312, 412) und die zweite Beschichtungsschicht (114, 314, 414, 512) entfernt wurden; und
Schätzen (S1070) mindestens eines von einer Dichte der ersten Beschichtungsschicht (112, 312, 412), einer Dichte der zweiten Beschichtungsschicht (114, 314, 414, 512), einer Dicke des Stromkollektors (116, 316, 416, 514) und einem Gewicht des Stromkollektors (116, 316, 416, 514) auf der Grundlage der ersten Kennwerte (118), der zweiten Kennwerte (122) und der dritten Kennwerte (132), wobei die ersten Kennwerte (118), die zweiten Kennwerte (122) und die dritten Kennwerte (132) jeweils einen Gewichtswert und einen Dickenwert umfassen, **dadurch gekennzeichnet, dass**
das Schätzen (S1070) das Feststellen basierend auf einer geschätzten Dicke des Stromkollektors (316, 416, 514), eines geschätzten Gewichts des Stromkollektors (316, 416, 514), eines theoretischen Gewichts des Stromkollektors (316, 416, 514) und einer theoretischen Dicke des Stromkollektors (316, 416, 514) umfasst, ob eine mit der Elektrode (110, 120, 130, 330, 430, 510, 530) assoziierte Messanomalie vorliegt.

2. Verfahren (600, 1000) nach Anspruch 1, wobei der Stromkollektor (116, 316, 416, 514) mindestens eine von einer Aluminium (Al)-Folie und einer Kupfer (Cu)-Folie umfasst.

3. Verfahren (600, 1000) nach Anspruch 1 oder 2, wobei die Elektrode (110, 120, 130, 330, 430, 510, 530) unter Verwendung einer Stanzmaschine oder eines Laserschneiders (210) auf eine eingestellte Größe geschnitten wird.

4. Verfahren (600, 1000) nach den Ansprüchen 1 bis 3, wobei jede von der ersten Beschichtungsschicht (112, 312, 412) und der zweiten Beschichtungsschicht (114, 314, 414, 512) mindestens eines von Nickel (Ni), Kobalt (Co), Mangan (Mn) und Eisen (Fe) enthält.

5. Verfahren (600, 1000) nach den Ansprüchen 1 bis 4, wobei jede von der ersten Beschichtungsschicht (112, 312, 412) und der zweiten Beschichtungsschicht (114, 314, 414, 512) Graphit oder Silizium (Si) enthält.

6. Verfahren (600, 1000) nach den Ansprüchen 1 bis 5, wobei das Entfernen S1030 der ersten Beschichtungsschicht (112, 312, 412) das Entfernen der ersten Beschichtungsschicht (112, 312, 412) durch wiederholtes Aussenden eines gepulsten Lasers (422, 522) in Richtung der ersten Beschichtungsschicht (112, 312, 412) umfasst.

7. Verfahren (600, 1000) nach Anspruch 1, wobei das Feststellen, ob die Messanomalie vorliegt, das Feststellen umfasst, dass die Elektrode (110, 120, 130, 330, 430, 510, 530) nicht auf die eingestellte Größe geschnitten wird oder dass der Stromkollektor (116, 316, 416, 514) in einem Fall gedehnt ist, in dem das geschätzte Gewicht des Stromkollektors (316, 416, 514) ungefähr gleich dem theoretischen Gewicht des Stromkollektors (316, 416, 514) ist und die geschätzte Dicke des Stromkollektors (316, 416, 514) nicht gleich der theoretischen Dicke des Stromkollektors (316, 416, 514) ist.

8. Verfahren (600, 1000) nach Anspruch 1, wobei das Feststellen, ob die Messanomalie vorliegt, das Feststellen umfasst, dass die Elektrode (110, 120, 130, 330, 430, 510, 530) in einem Fall nicht auf die eingestellte Größe geschnitten wird, in dem die geschätzte Dicke des Stromkollektors (316, 416, 514) ungefähr gleich der theoretischen Dicke des Stromkollektors (316, 416, 514) ist und das geschätzte Gewicht des Stromkollektors (316, 416, 514) nicht gleich dem theoretischen Gewicht des Stromkollektors (316, 416, 514) ist.

9. Verfahren (600, 1000) nach Anspruch 1, wobei das Feststellen, ob die Messanomalie vorliegt, das Feststellen umfasst, dass der Stromkollektor (116, 316, 416, 514) in einem Fall gedehnt ist, in dem die geschätzte Dicke des Stromkollektors (316, 416, 514) nicht gleich der theoretischen Dicke des Stromkollektors (316, 416, 514) ist und das geschätzte Gewicht des Stromkollektors (316, 416, 514) nicht gleich dem theoretischen Gewicht des Stromkollektors (316, 416, 514) ist.

10. Verfahren (600, 1000) nach Anspruch 1, wobei das Schätzen (S1070) Folgendes umfasst:
Schätzen der Dichte der ersten Beschichtungsschicht (112, 312, 412) und der Dichte der zweiten Beschichtungsschicht (114, 314, 414, 512) als Reaktion auf die Feststellung, dass keine Messanomalie vorliegt;
Vergleichen der geschätzten Dichte der ersten Beschichtungsschicht (112, 312, 412) mit einer Soll-Beschichtungsschichtdichte; und
Vergleichen der geschätzten Dichte der zweiten Beschichtungsschicht (114, 314, 414, 512) mit einer Soll-Beschichtungsschichtdichte.

11. Verfahren (600, 1000) nach den Ansprüchen 1 bis 10, wobei das Schätzen (S1070) das Schätzen der Dichte der ersten Beschichtungsschicht (112, 312, 412) auf der Grundlage der ersten Kennwerte (118) und der zweiten Kennwerte (122) umfasst.

12. Verfahren (600, 1000) nach den Ansprüchen 1 bis 11, wobei das Schätzen (S1070) das Schätzen der Dichte der zweiten Beschichtungsschicht (114, 314, 414, 512) auf der Grundlage der zweiten Kennwerte (122) und der dritten Kennwerte (132) umfasst.

13. Verfahren (600, 1000) nach den Ansprüchen 1 bis 12, wobei das Schätzen (S1070) das Schätzen des Gewichts und der Dicke des Stromkollektors (116, 316, 416, 514) auf der Grundlage der dritten Kennwerte (132) umfasst.

## Revendications

1. Procédé (600, 1000) d'estimation d'une densité d'électrode (120, 130, 330, 430, 510, 530) dans des batteries secondaires, le procédé (600, 1000) comportant :
la préparation (S1010) d'une électrode (110, 120, 130, 330, 430, 510, 530) comportant un collecteur de courant (116, 316, 416, 514) et de première et deuxième couches de revêtement (112, 114, 312, 314) appliquées sur le collecteur de courant (116, 316, 416, 514) ;
la mesure (S1020) de premières valeurs caractéristiques (118) de l'électrode (120, 130, 330, 430, 510, 530) ;
le retrait (S1030) de la première couche de revêtement (112, 312, 412) de l'électrode (120, 130, 330, 430, 510, 530) ;
la mesure (S1040) de deuxièmes valeurs caractéristiques (122) de l'électrode (120, 130, 330, 430, 510, 530) dont la première couche de revêtement (112, 312, 412) a été retirée ;
le retrait (S1050) de la deuxième couche de revêtement (114, 314, 414, 512) de l'électrode (120, 130, 330, 430, 510, 530) dont la première couche de revêtement (112, 312, 412) a été retirée ;
la mesure (S1060) de troisièmes valeurs caractéristiques (132) de l'électrode (120, 130, 330, 430, 510, 530) dont la première couche de revêtement (112, 312, 412) et la deuxième couche de revêtement (114, 314, 414, 512) ont été retirées ; et
l'estimation (S1070) d'au moins un élément parmi une densité de la première couche de revêtement (112, 312, 412), une densité de la deuxième couche de revêtement (114, 314, 414, 512), une épaisseur du collecteur de courant (116, 316, 416, 514), ou un poids du collecteur de courant (116, 316, 416, 514), sur la base des premières valeurs caractéristiques (118), les deuxièmes valeurs caractéristiques (122), et les troisièmes valeurs caractéristiques (132) dans lesquelles les premières valeurs caractéristiques (118), les deuxièmes valeurs caractéristiques (122), et les troisièmes valeurs caractéristiques (132) comportent chacune une valeur de poids et une valeur d'épaisseur **caractérisé en ce que**
l'estimation (S1070) comporte la détermination de la présence ou non d'une anomalie de mesure associée à l'électrode (110, 120, 130, 330, 430, 510, 530), sur la base d'une épaisseur estimée du collecteur de courant (316, 416, 514), d'un poids estimé du collecteur de courant (316, 416, 514), d'un poids théorique du collecteur de courant (316, 416, 514), et d'une épaisseur théorique du collecteur de courant (316, 416, 514).

2. Procédé (600, 1000) selon la revendication 1, dans lequel le collecteur de courant (116, 316, 416, 514) comporte au moins l'une parmi une feuille d'aluminium (Al) et une feuille de cuivre (Cu).

3. Procédé (600, 1000) selon les revendications 1 ou 2, dans lequel l'électrode (110, 120, 130, 330, 430, 510, 530) est découpée à une taille définie à l'aide d'une poinçonneuse ou d'une découpeuse laser (210).

4. Procédé (600, 1000) selon les revendications 1 à 3, dans lequel chacune parmi la première couche de revêtement (112, 312, 412) et la deuxième couche de revêtement (114, 314, 414, 512) comporte au moins l'une parmi le nickel (Ni), le cobalt (Co), le manganèse (Mn) et le fer (Fe).

5. Procédé (600, 1000) selon les revendications 1 à 4, dans lequel chacune parmi la première couche de revêtement (112, 312, 412) et la deuxième couche de revêtement (114, 314, 414, 512) comporte du graphite ou du silicium (Si).

6. Procédé (600, 1000) selon les revendications 1 à 5, dans lequel le retrait S1030 de la première couche de revêtement (112, 312, 412) comporte le retrait de la première couche de revêtement (112, 312, 412) par émission répétée d'un laser pulsé (422, 522) vers la première couche de revêtement (112, 312, 412).

7. Procédé (600, 1000) selon la revendication 1, dans lequel la détermination de la présence ou non de l'anomalie de mesure comporte la détermination du fait que l'électrode (110, 120, 130, 330, 430, 510, 530) n'est pas découpée à la taille définie ou le collecteur de courant (116, 316, 416, 514) est étiré dans un cas où le poids estimé du collecteur de courant (316, 416, 514) est environ égal au poids théorique du collecteur de courant (316, 416, 514) et l'épaisseur estimée du collecteur de courant (316, 416, 514) n'est pas égale à l'épaisseur théorique du collecteur de courant (316, 416, 514).

8. Procédé (600, 1000) selon la revendication 1, dans lequel la détermination de la présence ou non de l'anomalie de mesure comporte la détermination du fait que l'électrode (110, 120, 130, 330, 430, 510, 530) n'est pas découpée à la taille définie dans un cas où l'épaisseur estimée du collecteur de courant (316, 416, 514) est environ égale à l'épaisseur théorique du collecteur de courant (316, 416, 514) et le poids estimé du collecteur de courant (316, 416, 514) n'est pas égal au poids théorique du collecteur de courant (316, 416, 514).

9. Procédé (600, 1000) selon la revendication 1, dans lequel la détermination de la présence ou non de l'anomalie de mesure comporte la détermination du fait que le collecteur de courant (116, 316, 416, 514) est étiré dans un cas où l'épaisseur estimée du collecteur de courant (316, 416, 514) n'est pas égale à l'épaisseur théorique du collecteur de courant (316, 416, 514) et le poids estimé du collecteur de courant (316, 416, 514) n'est pas égal au poids théorique du collecteur de courant (316, 416, 514).

10. Procédé (600, 1000) selon la revendication 1, dans lequel l'estimation (S1070) comporte :
en réponse à la détermination de l'absence d'anomalie de mesure, l'estimation de la densité de la première couche de revêtement (112, 312, 412) et de la densité de la deuxième couche de revêtement (114, 314, 414, 512) ;
la comparaison de la densité estimée de la première couche de revêtement (112, 312, 412) à une densité de couche de revêtement cible ; et
la comparaison de la densité estimée de la deuxième couche de revêtement (114, 314, 414, 512) à une densité de couche de revêtement cible.

11. Procédé (600, 1000) selon la revendication 1 à 10, dans lequel l'estimation (S1070) comporte l'estimation de la densité de la première couche de revêtement (112, 312, 412) sur la base des premières valeurs caractéristiques (118) et des deuxièmes valeurs caractéristiques (122).

12. Procédé (600, 1000) selon les revendications 1 à 11, dans lequel l'estimation (S1070) comporte l'estimation de la densité de la deuxième couche de revêtement (114, 314, 414, 512) sur la base des deuxièmes valeurs caractéristiques (122) et des troisièmes valeurs caractéristiques (132).

13. Procédé (600, 1000) selon la revendication 1 à 12, dans lequel l'estimation (S1070) comporte l'estimation du poids et de l'épaisseur du collecteur de courant (116, 316, 416, 514) sur la base des troisièmes valeurs caractéristiques (132).
